# EUROPEAN PATENT APPLICATION

(11) **EP 4 624 900 A1**
(43) Date of publication of application: **01.10.2025**
(21) Application number: 25164199.9
(22) Date of filing: 17.03.2025
(51) Int. Cl.: G01N 21/27, G01N 21/31, G01N 21/39, G01J 3/433, G01N 21/3504, G01N 21/359

(54) **MEASUREMENT APPARATUS, MEASUREMENT METHOD, AND NON-TRANSITORY COMPUTER READABLE MEDIUM**

(30) Priority: 28.03.2024 JP 2024054482
(71) Applicant: Yokogawa Electric Corporation, Tokyo 180-8750 (JP)
(72) Inventor: KITAGAWA, Yuma, Musashino-shi, 180-8750 (JP); SARUYA, Toshiyuki, Musashino-shi, 180-8750 (JP)
(74) Representative: Stöckeler, Ferdinand

(57) **Abstract**

A measurement apparatus (1) includes an irradiator (10) that irradiates irradiation light (L), a light receiver (20) that receives light to be measured (ML) based on the irradiation light (L) irradiated by the irradiator (10) onto a region to be measured (R), and a controller (90) that calculates a state of a gas to be measured (G1) contained in the region to be measured (R) based on first reference information on the gas to be measured (G1) acquired at a first central wavelength (λ1) of the gas to be measured (G1), second reference information on an interfering gas (G2) acquired at a second central wavelength (λ2) of the interfering gas (G2) and at the first central wavelength (λ1), and a received light signal received by the light receiver (20) at the first central wavelength (λ1) of the light to be measured (ML) and at the second central wavelength (λ2).

## Description

### CROSS-REFERENCE TO RELATED APPLICATION

The present application claims priority to Japanese Patent Application No. 2024-054482 filed on March 28, 2024, the entire contents of which are incorporated herein by reference.

### TECHNICAL FIELD

The present disclosure relates to a measurement apparatus, a measurement method, and a non-transitory computer readable medium.

### BACKGROUND

Technology for measuring the state of a gas to be measured, including the concentration or the like of the gas to be measured, is known. For example, Patent Literature (PTL) 1 discloses a laser gas analyzer that can eliminate the effects of interference and accurately calculate concentration by adding simple analysis logic.

### CITATION LIST

### Patent Literature

PTL 1: JP 2011-191246 A

### SUMMARY

However, the conventional technology described in PTL 1 has room for improvement in reducing the effect of an interfering gas in the measurement of the state of the gas to be measured.

It would be helpful to provide a measurement apparatus, a measurement method, and a non-transitory computer readable medium capable of accurately measuring the state of a gas to be measured by reducing the effect of an interfering gas.

A measurement apparatus according to several embodiments includes an irradiator configured to irradiate irradiation light, a light receiver configured to receive light to be measured based on the irradiation light irradiated by the irradiator onto a region to be measured, and a controller configured to calculate a state of a gas to be measured contained in the region to be measured based on first reference information on the gas to be measured acquired at a first central wavelength of the gas to be measured, second reference information on an interfering gas acquired at a second central wavelength of the interfering gas and at the first central wavelength, and a received light signal received by the light receiver at the first central wavelength of the light to be measured and at the second central wavelength.

The measurement apparatus can thereby accurately measure the state of a gas to be measured by reducing the effect of an interfering gas. The measurement apparatus can accurately measure the state of the gas to be measured by correcting errors caused by the interfering gas while using reference information including the second reference information on the interfering gas. For example, during the measurement process, since the measurement apparatus acquires and corrects information on the interfering gas included in the region to be measured, the measurement value based on the received light signal can be corrected according to any changes that may occur in the distance to the scattering body or the concentration of the interfering gas. For example, when measuring the state of the gas to be measured by Wavelength Modulation Spectroscopy (WMS) measurement, the measurement apparatus can easily acquire a measurement value in which the error from interfering gas is reduced. The measurement apparatus can, for example, estimate the column concentration caused solely by NH₃ as the gas to be measured.

In a measurement apparatus according to an embodiment, the controller may be configured to modulate a wavelength of the irradiation light at a modulation frequency, and the first reference information may include, as first correlation data, a first calibration curve in which a concentration of the gas to be measured and an intensity of the received light signal at a frequency component twice the modulation frequency are associated with each other. This enables the measurement apparatus to accurately calculate the corresponding concentration by comparing the magnitude of the 2f component obtained from the received light signal at the first central wavelength with the first calibration curve acquired in advance.

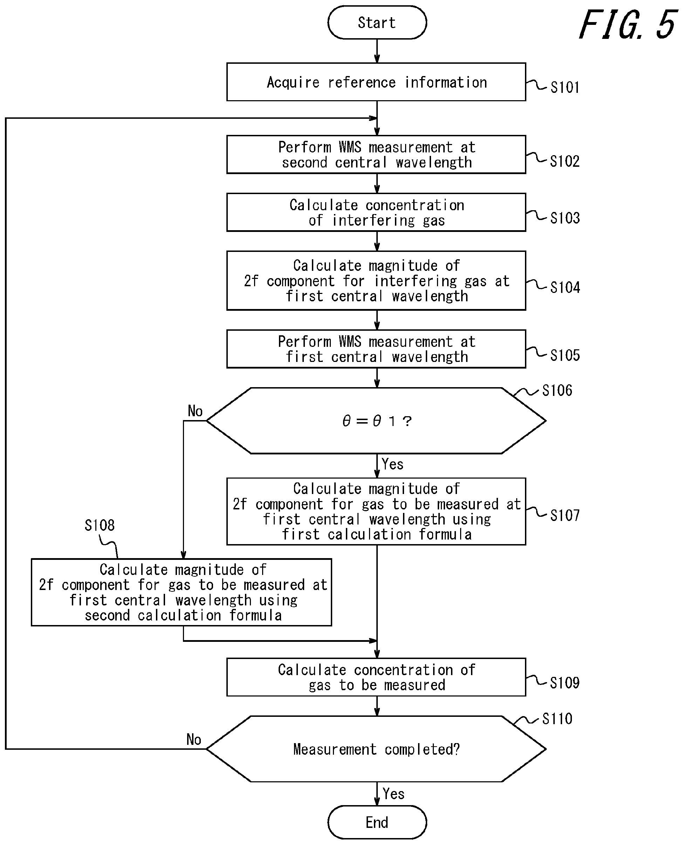

In a measurement apparatus according to an embodiment, the first reference information may include a first phase of the received light signal of the gas to be measured. This enables the measurement apparatus to set a determination criterion for determining which of a first calculation formula and a second calculation formula to use in calculating the magnitude of the 2f component for the gas to be measured at the first central wavelength, as illustrated in FIG. 5. For example, the measurement apparatus can set the relationship between the phase and the first phase as the determination criterion. The measurement apparatus can select an appropriate calculation formula according to this relationship.

In a measurement apparatus according to an embodiment, the second reference information may include, as second correlation data, a second calibration curve in which a concentration of the interfering gas and an intensity of the received light signal at a frequency component twice the modulation frequency are associated with each other. This enables the measurement apparatus to accurately calculate the corresponding concentration by comparing the magnitude of the 2f component obtained from the received light signal at the second central wavelength with the second calibration curve acquired in advance.

In a measurement apparatus according to an embodiment, the second calibration curve may include both a calibration curve at the first central wavelength and a calibration curve at the second central wavelength. This enables the measurement apparatus to accurately calculate the corresponding concentration by comparing the magnitude of the 2f component obtained from the received light signal at the second central wavelength with the calibration curve at the second central wavelength acquired in advance. The measurement apparatus can then accurately calculate the magnitude of the corresponding 2f component by comparing the calculated concentration with the calibration curve at the first central wavelength acquired in advance.

In a measurement apparatus according to an embodiment, the controller may be configured to calculate the concentration of the interfering gas by comparing a first intensity of the received light signal at the frequency component, as acquired at the second central wavelength, with the second calibration curve at the second central wavelength. This enables the measurement apparatus to easily acquire correction information for reducing the error of an interfering gas with respect to the measurement value when measuring the state of the gas to be measured by WMS measurement.

In a measurement apparatus according to an embodiment, the controller may be configured to calculate a second intensity of the received light signal at the frequency component for the interfering gas at the first central wavelength by comparing the calculated concentration of the interfering gas with the second calibration curve at the first central wavelength. This enables the measurement apparatus to accurately acquire the magnitude of the 2f component as the correction information described above.

In a measurement apparatus according to an embodiment, the controller may be configured to calculate a fourth intensity of the received light signal at the frequency component for the gas to be measured at the first central wavelength by canceling a contribution of the second intensity in a third intensity of the received light signal at the frequency component, as acquired at the first central wavelength. This enables the measurement apparatus to reduce the error of the interfering gas with respect to the measurement value when measuring the state of the gas to be measured by WMS measurement, for example.

In a measurement apparatus according to an embodiment, the controller may be configured to change a formula for calculating the fourth intensity according to whether a phase of the received light signal associated with the third intensity matches the first phase. This enables the measurement apparatus to calculate the fourth intensity with a more appropriate calculation formula according to the relationship between the phase and the first phase. The measurement apparatus can thereby accurately measure the state of a gas to be measured by reducing the effect of an interfering gas.

In a measurement apparatus according to an embodiment, the controller may be configured to calculate the concentration of the gas to be measured as the state of the gas to be measured by comparing the calculated fourth intensity with the first calibration curve. This enables the measurement apparatus to accurately calculate the corresponding concentration by comparing the magnitude of the 2f component obtained from the received light signal at the first central wavelength with the first calibration curve acquired in advance. The measurement apparatus can accurately measure the state of a gas to be measured by reducing the effect of an interfering gas. For example, since the measurement apparatus acquires the concentration of the interfering gas included in the region to be measured and corrects the measurement value, the measurement value can be corrected according to any changes that may occur in the distance to the scattering body or the concentration of the interfering gas.

A measurement method according to several embodiments includes irradiating irradiation light, receiving light to be measured based on the irradiation light irradiated onto a region to be measured, and calculating a state of a gas to be measured contained in the region to be measured based on first reference information on the gas to be measured acquired at a first central wavelength of the gas to be measured, second reference information on an interfering gas acquired at a second central wavelength of the interfering gas and at the first central wavelength, and a received light signal received at the first central wavelength of the light to be measured and at the second central wavelength.

The measurement apparatus executing the measurement method can thereby accurately measure the state of a gas to be measured by reducing the effect of an interfering gas. The measurement apparatus can accurately measure the state of the gas to be measured by correcting errors caused by the interfering gas while using reference information including the second reference information on the interfering gas. For example, during the measurement process, since the measurement apparatus acquires and corrects information on the interfering gas included in the region to be measured, the measurement value based on the received light signal can be corrected according to any changes that may occur in the distance to the scattering body or the concentration of the interfering gas. For example, when measuring the state of the gas to be measured by WMS measurement, the measurement apparatus can easily acquire a measurement value in which the error from interfering gas is reduced. The measurement apparatus can, for example, estimate the column concentration caused solely by NH₃ as the gas to be measured.

A non-transitory computer readable medium according to several embodiments stores a program. The program is configured to cause a measurement apparatus to execute operations including irradiating irradiation light, receiving light to be measured based on the irradiation light irradiated onto a region to be measured, and calculating a state of a gas to be measured contained in the region to be measured based on first reference information on the gas to be measured acquired at a first central wavelength of the gas to be measured, second reference information on an interfering gas acquired at a second central wavelength of the interfering gas and at the first central wavelength, and a received light signal received at the first central wavelength of the light to be measured and at the second central wavelength.

The measurement apparatus can thereby accurately measure the state of a gas to be measured by reducing the effect of an interfering gas. The measurement apparatus can accurately measure the state of the gas to be measured by correcting errors caused by the interfering gas while using reference information including the second reference information on the interfering gas. For example, during the measurement process, since the measurement apparatus acquires and corrects information on the interfering gas included in the region to be measured, the measurement value based on the received light signal can be corrected according to any changes that may occur in the distance to the scattering body or the concentration of the interfering gas. For example, when measuring the state of the gas to be measured by WMS measurement, the measurement apparatus can easily acquire a measurement value in which the error from interfering gas is reduced. The measurement apparatus can, for example, estimate the column concentration caused solely by NH₃ as the gas to be measured.

According to the present disclosure, a measurement apparatus, a measurement method, and a non-transitory computer readable medium capable of accurately measuring the state of a gas to be measured by reducing the effect of an interfering gas can be provided.

### BRIEF DESCRIPTION OF THE DRAWINGS

In the accompanying drawings:
FIG. 1 is a block diagram illustrating an example configuration of a measurement apparatus according to an embodiment of the present disclosure;
FIG. 2 is a first diagram illustrating an example of operations by the measurement apparatus in FIG. 1;
FIG. 3 is a second diagram illustrating an example of operations by the measurement apparatus in FIG. 1;
FIG. 4 is a third diagram illustrating an example of operations by the measurement apparatus in FIG. 1;
FIG. 5 is a flowchart illustrating an example of a measurement method executed by the measurement apparatus in FIG. 1; and
FIG. 6 is a graph illustrating a problem with conventional technology.

### DETAILED DESCRIPTION

The background and problems with conventional technology are described in greater detail.

Spectroscopic gas detectors using a laser as a light source are well known. In a conventional spectroscopic gas detector, a laser light whose wavelength is modulated is irradiated into a space as an irradiation light, and the returned light that is reflected or scattered by an object located in the background of the area where the gas to be measured may exist is received as light to be measured. The conventional spectroscopic gas detector detects the gas to be measured based on changes in a received light signal outputted by a photodetector upon receiving the light to be measured. For example, the conventional spectroscopic gas detector detects the target gas to be measured based on the light to be measured by utilizing the optical absorption characteristics inherent to the gas to be measured.

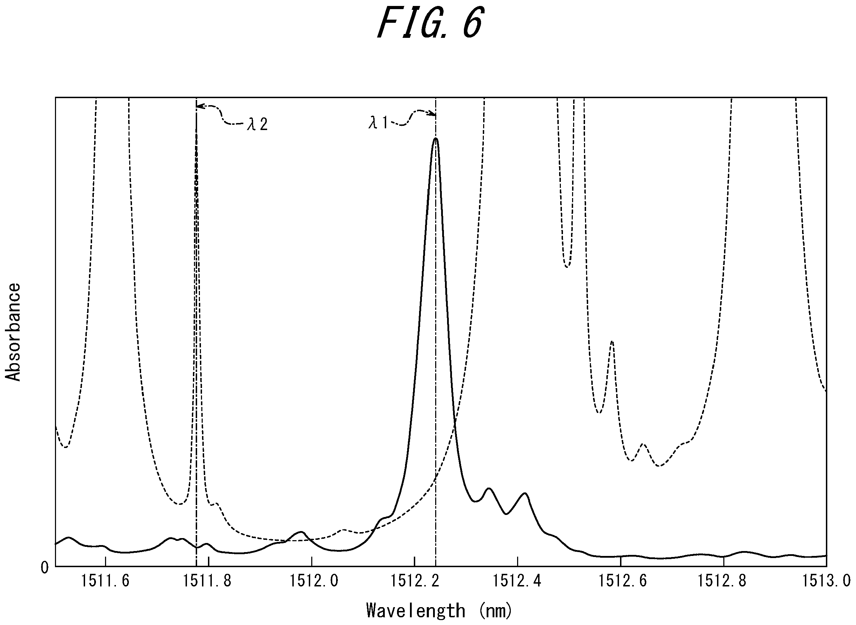

FIG. 6 is a graph illustrating a problem with conventional technology. In FIG. 6, the solid graph illustrates the wavelength dependence of the absorbance of ammonia (NH₃) as the gas to be measured. The dashed graph illustrates the wavelength dependence of the absorbance of water (H₂O) as an interfering gas.

When measuring the state of NH₃ using light, light sources with wavelengths in the near-infrared region are widely used. For example, Wavelength Modulation Spectroscopy (WMS) is known for achieving highly sensitive measurements and is widely applied. In the case of using WMS to measure NH₃ as the gas to be measured in the near-infrared region, the wavelength of light used as the light source is mainly limited to the 1.5 µm band due to the wavelength dependence of the absorption spectrum of the gas to be measured.

The wavelength of the light used for the light source is matched to predetermined absorption peaks among the numerous absorption peaks of the gas to be measured. The predetermined absorption peaks include, for example, absorption peaks with high sensitivity and high absorbance and which do not overlap, i.e., do not interfere with, the absorption of other interfering gases due to gas selectivity. To detect NH₃ leaked into the atmosphere, it is necessary to select an absorption peak whose absorption does not interfere with that of atmospheric gases.

However, absorption by H₂O, for example, is mostly in the 1.5 µm band. Therefore, it is not easy to select an absorption peak in NH₃ that completely does not interfere with H₂O. Therefore, even if the wavelength of light is set to the wavelength of a certain absorption peak in NH₃, the measurement value related to the state of the gas to be measured will include error caused by H₂O. In addition, since H₂O is contained in the entire atmosphere, its concentration varies depending on the distance to the background. This is due to how the concentration as a signal value acquired by WMS is an integrated value of concentration over the optical path length. Such concentration is specifically called column concentration and is expressed in units of ppm·m.

To address the above-described problems, it would be helpful to provide a measurement apparatus, a measurement method, and a non-transitory computer readable medium capable of accurately measuring the state of a gas to be measured by reducing the effect of an interfering gas. For example, it would be helpful to provide a measurement apparatus, a measurement method, and a non-transitory computer readable medium capable of correcting an error of an interfering gas, such as H₂O, from a measurement value that is based on a received light signal, for a target gas to be measured such as NH₃, that includes the error.

Embodiments of the present disclosure are mainly described below with reference to the drawings. The following description also applies to the measurement method and non-transitory computer readable medium storing a program executed by a measurement apparatus 1 to which the present disclosure is applied.

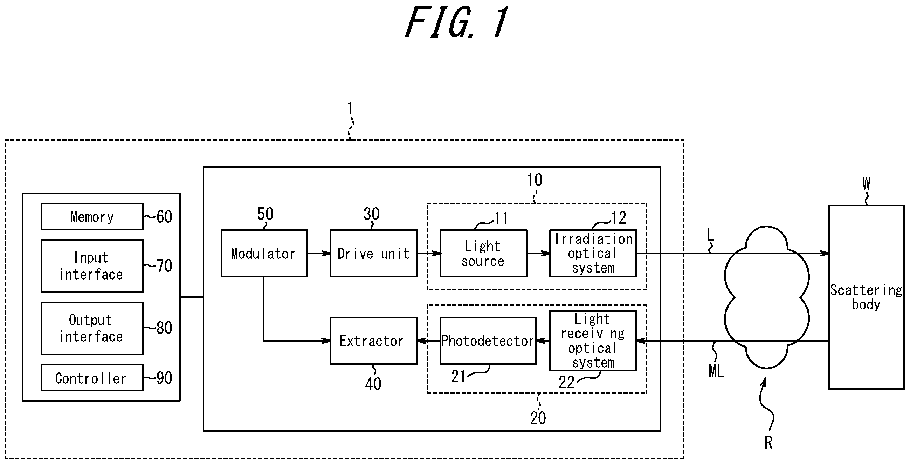

FIG. 1 is a block diagram illustrating an example configuration of a measurement apparatus 1 according to an embodiment of the present disclosure. An example of the configuration and functions of the measurement apparatus 1 according to an embodiment of the present disclosure is mainly described with reference to FIG. 1.

The measurement apparatus 1 includes an irradiator 10, a light receiver 20, a drive unit 30, an extractor 40, a modulator 50, a memory 60, an input interface 70, an output interface 80, and a controller 90.

The irradiator 10 includes a light source 11 and an irradiation optical system 12. The light source 11 includes a laser such as a semiconductor laser. The irradiation optical system 12 includes optical elements such as lenses and mirrors that optically act on the irradiation light L emitted from the light source 11. The irradiator 10 guides the irradiation light L emitted from the light source 11 to the outside of the measurement apparatus 1 via the irradiation optical system 12. The irradiator 10 irradiates the irradiation light L toward the region to be measured R where the gas to be measured G1 can exist. Apart from the gas to be measured G1, which can additionally exist for reasons such as leakage, the region to be measured R includes an interfering gas G2, such as H₂O, that is normally contained in the atmosphere.

In the present disclosure, the "gas to be measured G1" includes, for example, any gas targeted for detection and measurement using the measurement apparatus 1. For example, the gas to be measured G1 may include NH₃. The "interfering gas G2" includes, for example, any gas whose absorption interferes at the first central wavelength of the absorption peak of the gas to be measured G1. For example, the interfering gas G2 may include H₂O. The irradiator 10 irradiates the irradiation light L toward the region to be measured R where the gas to be measured G1 may exist in addition to the interfering gas G2. The region to be measured R is, for example, located in the space between a scattering body W and the irradiator 10. The scattering body W includes background objects such as walls and pipes.

The wavelength of the irradiation light L irradiated by the irradiator 10 is included in the optical absorption band of the gas to be measured G1. That is, the wavelength of the irradiation light L is included in one first optical absorption wavelength band of the gas to be measured G1. Similarly, the wavelength of the irradiation light L is included in the optical absorption band of the interfering gas G2. That is, the wavelength of the irradiation light L is included in one second optical absorption wavelength band of the interfering gas G2. Each of the first optical absorption wavelength band and the second optical absorption wavelength band is included in a wavelength region such as the visible region and the infrared region, for example.

The light receiver 20 has a photodetector 21 and a light receiving optical system 22. The photodetector 21 includes a light receiving element such as a photodiode (PD) and an I-V conversion circuit. The light receiving optical system 22 includes optical elements such as lenses and mirrors that optically act on light such as light to be measured ML incident on the light receiver 20. The light receiver 20 directs the light such as the light to be measured ML incident on the light receiver 20 to the photodetector 21 via the light receiving optical system 22. The light receiver 20 receives the light to be measured ML based on the irradiation light L irradiated by the irradiator 10 onto the region to be measured R.

In the present disclosure, the "light to be measured ML" includes, for example, scattered light or reflected light, from the scattering body W, that is based on the irradiation light L irradiated from the irradiator 10 and is absorbed by a gas present in the region to be measured R, such as the gas to be measured G1 and the interfering gas G2. The light receiver 20 receives the light to be measured ML transmitted through the gas present in the region to be measured R between the scattering body W and the light receiver 20. At least a portion of the wavelength band that can be received by the light receiver 20 is included in the optical absorption band of the gas. The photodetector 21 of the light receiver 20 has detection sensitivity at the wavelength of the light to be measured ML.

The light receiver 20 is arranged on the same side as the irradiator 10. More specifically, the irradiator 10 is arranged opposite the scattering body W with respect to the region to be measured R, such that the region to be measured R is located between the scattering body W and the irradiator 10. Similarly, the light receiver 20 is arranged opposite the scattering body W with respect to the region to be measured R, such that the region to be measured R is located between the scattering body W and the light receiver 20.

The photodetector 21 further includes the aforementioned I-V conversion circuit that converts the current-based received light signal, outputted when the PD detects the light to be measured ML, into a voltage. Upon detecting the light to be measured ML, the photodetector 21 converts the current-based received light signal to a voltage-based received light signal and outputs the result to the extractor 40.

The drive unit 30 includes a drive module or the like for driving the light source 11 of the irradiator 10. The drive module includes, for example, a laser driver for driving a laser such as a semiconductor laser.

The extractor 40 includes any appropriate circuit module that extracts a predetermined frequency component from the voltage-based received light signal outputted from the photodetector 21 of the light receiver 20. The circuit module includes, for example, a lock-in amplifier. The lock-in amplifier extracts the predetermined frequency component from the received light signal by receiving a voltage signal indicating a signal waveform, such as a sinusoidal waveform varying at a predetermined frequency, outputted from the modulator 50 and multiplying the voltage signal by the voltage-based received light signal.

The modulator 50 includes any appropriate circuit module that outputs a voltage signal indicating a predetermined signal waveform. The circuit module includes, for example, a function generator (FG) or the like. The FG outputs a voltage signal as a modulation signal to the drive unit 30 to modulate the wavelength of the irradiation light L irradiated from the irradiator 10 at a modulation frequency f. The FG outputs a voltage signal as a reference signal to the extractor 40 to extract the predetermined frequency component from the voltage-based received light signal in the extractor 40.

The memory 60 includes a storage module such as a hard disk drive (HDD), a solid state drive (SSD), an electrically erasable programmable read-only memory (EEPROM), a read-only memory (ROM), or a random access memory (RAM). The memory 60 stores information necessary to realize the operations of the measurement apparatus 1. The memory 60 stores information obtained by operations of the measurement apparatus 1. For example, the memory 60 stores system programs, application programs, and various data acquired by any means such as communication.

The memory 60 may function as a main storage module, an auxiliary storage module, or a cache memory. The memory 60 is not limited to being internal to the measurement apparatus 1 and may include an external storage module connected through a digital input/output port or the like, such as universal serial bus (USB).

The input interface 70 includes one or more interfaces for input to detect user input and acquire input information based on user operations. Examples of the interfaces for input include physical keys, capacitive keys, a touchscreen provided integrally with a display of the output interface 80, an imaging module such as a camera, a microphone that receives audio input, or the like.

The output interface 80 includes one or more interfaces for output to output information and notify the user. Examples of the interfaces for output include a display that outputs information as images, a speaker that outputs information as sound, a vibrator that outputs information as vibration, and the like. Examples of the display include a liquid crystal display (LCD) and an organic electro luminescence (EL) display.

The controller 90 includes one or more processors. In the present disclosure, the "processor" is a general-purpose processor or a dedicated processor specialized for particular processing, but these examples are not limiting. Examples of the controller 90 include a central processing unit (CPU). The controller 90 is communicably connected with each component of the measurement apparatus 1 and controls operations of the measurement apparatus 1 overall.

The measurement apparatus 1 may be configured as a single apparatus such that the memory 60, input interface 70, output interface 80, and controller 90 are collectively and integrally arranged with the other components, or as a separate apparatus whose components are arranged separately from the other components. In the case in which the measurement apparatus 1 is configured as a separate apparatus, the memory 60, input interface 70, output interface 80, and controller 90 may be included in any general-purpose electronic device, such as a personal computer (PC), tablet PC, smartphone, or wearable device such as a smartwatch, that can realize the corresponding functions. The measurement apparatus 1 may perform control using such a general-purpose electronic device to execute various processes related to the below-described measurement method in cooperation with the electronic device.

The measurement apparatus 1 operates as a spectroscopic gas detector using the light source 11, for example. To detect the ambient gas to be measured G1, the measurement apparatus 1 irradiates a laser beam from the light source 11 of the irradiator 10 onto the region to be measured R as the irradiation light L. Using the light receiver 20, the measurement apparatus 1 receives the light to be measured ML, which is scattered or reflected back by the scattering body W located in the background of the region to be measured R where the gas to be measured G1 may be present.

The measurement apparatus 1 detects the gas to be measured G1 using optical absorption characteristics determined by the type of the gas to be measured G1. The measurement apparatus 1 operates by WMS, which is one laser spectroscopy method. WMS is a method for acquiring the state of the gas to be measured G1 in the optical path by modulating the wavelength of the laser light and measuring the change in the received light signal of the modulated light to be measured ML.

In the present disclosure, the "state of the gas to be measured G1" includes, for example, the concentration of the gas to be measured G1. The concentration of the gas to be measured G1 includes, for example, the column concentration of the gas to be measured G1. The column concentration is given by the product of the optical path length when light passes through the gas to be measured G1 and the concentration of the gas to be measured G1. The units of the column concentration are expressed in ppm·m, as described above.

The basic processing by the controller 90 when the measurement apparatus 1 operates by WMS is now mainly described.

The controller 90 controls the laser driver included in the drive unit 30, for example. The controller 90 thereby sets the central wavelength λc of the laser light outputted from the light source 11 to the desired first central wavelength at the absorption peak of the gas to be measured G1.

The controller 90 controls the FG included in the modulator 50 to cause a voltage signal varying at the modulation frequency f to be inputted as a modulation signal from the modulator 50 to the laser driver included in the drive unit 30. The controller 90 modulates the wavelength of the irradiation light L irradiated from the irradiator 10 at the modulation frequency f by causing the modulation signal to be inputted from the FG to the drive unit 30. The controller 90 controls the FG so that the wavelength of the laser light as the irradiation light L is modulated with a constant modulation frequency f and modulation width ΔλL around the central wavelength λc. For example, the controller 90 modulates the wavelength of the laser light with a modulation frequency f and a modulation width ΔλL around the central wavelength λc. The modulation width ΔλL is, for example, expressed in units of wavelength rather than frequency.

The controller 90 causes the laser light whose wavelength is modulated to be irradiated as irradiation light L toward the region to be measured R by the light source 11 and irradiation optical system 12 of the irradiator 10. The light to be measured ML scattered or reflected by the scattering body W is detected by the photodetector 21 via the light receiving optical system 22 of the light receiver 20. The light to be measured ML is converted into a photocurrent by the PD of the photodetector 21 and into a voltage signal by the I-V conversion circuit of the photodetector 21. The light receiver 20 outputs this voltage signal as a received light signal to the extractor 40.

The controller 90 measures the state of the gas to be measured G1 based on the received light signal from the light receiver 20. The controller 90 extracts a frequency component that is twice the modulation frequency f, i.e., a 2f component, from the received light signal and calculates the state of the gas to be measured G1 based on the extracted frequency component.

For example, when the desired gas to be measured G1 is present in the optical path of the irradiation light L, a frequency component that is twice the modulation frequency f is newly generated in the light to be measured ML that passed through the gas to be measured G1. The magnitude of the 2f component in the received light signal is proportional to the column concentration of the gas to be measured G1. Therefore, the controller 90 acquires a voltage signal proportional to the column concentration of the gas to be measured G1 by extracting the 2f component from the received light signal based on phase sensitive detection using the lock-in amplifier of the extractor 40. The controller 90 calculates the column concentration of the gas to be measured G1 by measuring the magnitude of the 2f component.

The 2f component is proportional not only to the column concentration of the gas to be measured G1, but also to the received light power of the light to be measured ML. In the present disclosure, the "received light power" is the received light power of the light to be measured ML at the light receiver 20. The received light power varies based on the distance from the scattering body W to the measurement apparatus 1, the condition of the surface of the scattering body W, and other such factors. Therefore, the controller 90 needs to remove the variation in the received light power from the 2f component in order to calculate the column concentration of the gas to be measured G1.

Therefore, the controller 90 uses the same frequency component as the modulation frequency f, i.e., the 1f component. The controller 90 also acquires the magnitude of the 1f component in the same way as the 2f component using the lock-in amplifier. The magnitude of the 1f component in the received light signal is proportional to the received light power. Therefore, the controller 90 divides the 2f component by the 1f component, i.e., calculates the 2f component/1f component, to cancel the variation of the received light power and acquire a value proportional to the column concentration of the gas to be measured G1.

As described above, the controller 90 measures the state of the gas to be measured G1 based on the absorption characteristics of the gas to be measured G1 with respect to the irradiation light L. The controller 90 measures the state of the gas to be measured G1 by the 1f signal and 2f signal obtained by the lock-in amplifier of the extractor 40 based on the received light signal from the light receiver 20. For example, the controller 90 calculates the column concentration of the gas to be measured G1 from the 1f signal and 2f signal obtained from the received light signal from the light receiver 20.

In addition to the above, the controller 90 also performs other calculations related to the measurement of the state of the gas to be measured G1. For example, as illustrated in FIG. 6, when the interfering gas G2 has a predetermined absorbance at the first central wavelength λ1 of the gas to be measured G1, the basic calculation method described above will result in an error, due to the interfering gas G2, in the calculated measurement value. Operations of the measurement apparatus 1 to solve such a problem are mainly described below, taking NH₃ as the gas to be measured G1 and H₂O as the interfering gas G2 as an example. The present disclosure is similarly applicable, however, to other gases.

FIG. 6 illustrates how in the near-infrared region, the absorption peak of NH₃, which also includes the interference of H₂O, is located at the first central wavelength λ1. As an example, the first central wavelength λ1 is approximately 1512.2 nm. The absorption waveform of H₂O is superimposed on the absorption waveform of NH₃ at the first central wavelength λ1. In other words, interference occurs. As described above, in WMS measurement, the column concentration of NH₃ is proportional to the magnitude of the 2f component in the light to be measured ML. In the actual measurement, the 1f component is also acquired to cancel the variation of the received light power, and the 2f component/1f component is calculated. A received light signal that is independent of changes in received light power and is proportional to the column concentration is thereby acquired.

This is an advantage of WMS, but since the 1f component is unrelated to absorption and is not essential to the present disclosure, only the 2f component is primarily focused on below. As illustrated in FIG. 6, the 2f component of the received light signal includes an error due to H₂O when interference by H₂O occurs, as in the case of the absorption peak at the first central wavelength λ1.

In both the calibration and measurement processes described below, phase sensitive detection is performed using the lock-in amplifier in the extractor 40 for the measurement of small signals. The received light signal based on the phase sensitive detection is acquired as a vector. Usually, the magnitude of the vector of the received light signal is taken as the 2f component proportional to the concentration. The error due to gases other than the target gas to be measured G1 appears as a vector sum.

According to a simulation at the first central wavelength λ1 using a database, the phase of the received light signal due to the "hem" of the superimposed absorption spectrum of H₂O is 180° different from the phase of the received light signal of NH₃. This causes the received light signals to cancel each other. Therefore, by considering not only the magnitude of the received light signal as a vector including NH₃ and H₂O but also the phase thereof, the measurement apparatus 1 can estimate the received light signal due only to NH₃, with the effect of H₂O corrected. The measurement apparatus 1 calculates the column concentration of NH₃ by using a previously acquired calibration curve for the received light signal. The calibration curve is basically generated with respect to the magnitude of the received light signal and does not include phase information.

The measurement apparatus 1 needs to acquire information on the column concentration of H₂O in a pre-calibration process. The measurement apparatus 1 acquires such information in a band other than the first central wavelength λ1 to avoid the effect of absorption by NH₃. For example, the absorption peak of only H₂O at a second central wavelength λ2 illustrated in FIG. 6 is used. As an example, the second central wavelength λ2 is approximately 1511.8 nm. By using the absorption peak of H₂O at the second central wavelength λ2, the effect of NH₃ absorption is reduced, and H₂O becomes dominant.

If a calibration curve, including the column concentration of H₂O as information, is acquired at the second central wavelength λ2 in advance by the calibration process, the measurement apparatus 1 can acquire the column concentration of H₂O by WMS measurement at the second central wavelength λ2 during the measurement process. If the calibration curve of H₂O at the first central wavelength λ1 is also acquired in advance by the calibration process, the measurement apparatus 1 can acquire the magnitude of the 2f component due to H₂O at the first central wavelength λ1 based on the column concentration of H₂O acquired at the second central wavelength λ2. The measurement apparatus 1 can extract the received light signal due only to NH₃ from the magnitude and phase of the received light signal by performing the WMS measurement at the first central wavelength λ1 and using the information on the 2f component due to H₂O. As described above, the measurement apparatus 1 can reproduce the 2f component due only to NH₃ by acquiring the column concentration of H₂O based on the measurement result at the second central wavelength λ2, even if the measurement value at the first central wavelength λ1 contains contributions from both H₂O and NH₃.

The operations of the measurement apparatus 1 outlined above are described in more detail below with reference to the drawings.

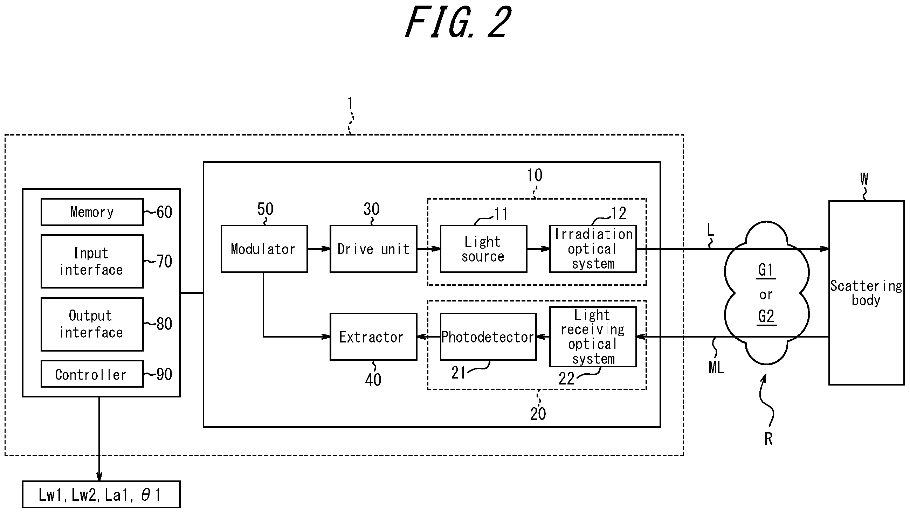

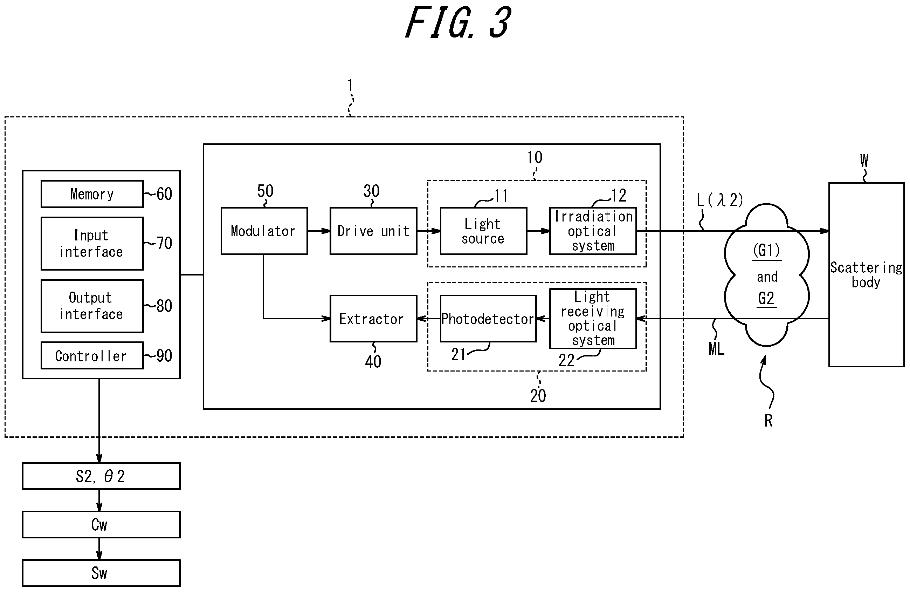

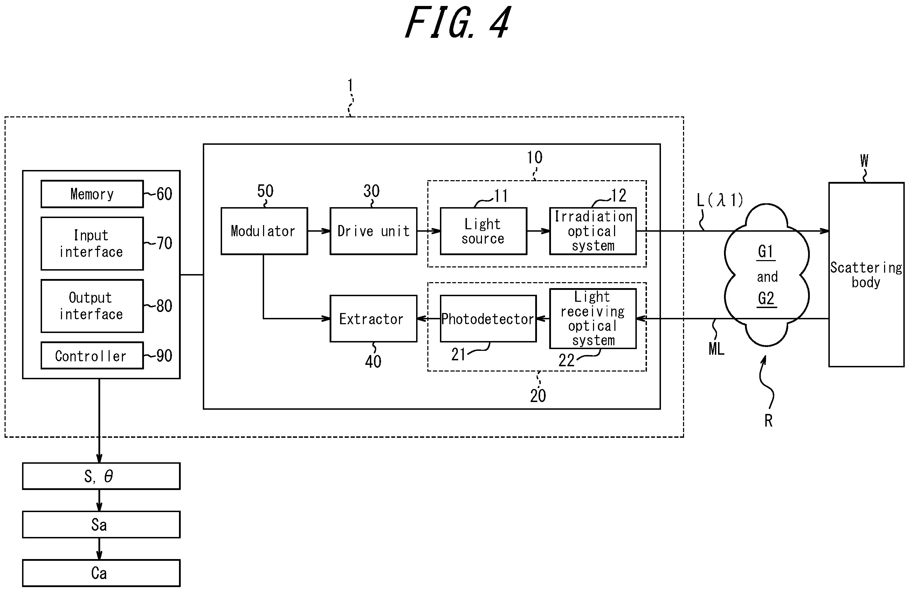

FIG. 2 is a first diagram illustrating an example of operations by the measurement apparatus 1 in FIG. 1. FIG. 2 conceptually illustrates the configuration in the calibration process performed by the measurement apparatus 1 prior to the measurement of the state of the gas to be measured G1. FIG. 3 is a second diagram illustrating an example of operations by the measurement apparatus 1 in FIG. 1. FIG. 4 is a third diagram illustrating an example of operations by the measurement apparatus 1 in FIG. 1. FIGS. 3 and 4 conceptually illustrate the configuration in the measurement process when the measurement apparatus 1 actually performs the measurement of the state of the gas to be measured G1. FIG. 5 is a flowchart illustrating an example of a measurement method executed by the measurement apparatus 1 in FIG. 1.

In step S101, the controller 90 of the measurement apparatus 1 acquires reference information. In the present disclosure, the "reference information" includes, for example, first reference information and second reference information. Step S101 corresponds to a calibration process performed by the measurement apparatus 1 before measuring the state of the gas to be measured G1. As illustrated in FIG. 2, in step S101, only one of the gas to be measured G1 and the interfering gas G2, for example, is present by itself in the region to be measured R, and the first reference information and second reference information are acquired for these gases, respectively. The above-described configuration is not limiting, and the reference information may be acquired in advance at a location different from the region to be measured R.

The first reference information is, for example, reference information on the gas to be measured G1 acquired at the first central wavelength λ1 of the gas to be measured G1. The first reference information includes, as first correlation data, a first calibration curve La1 in which the concentration Ca of the gas to be measured G1 and the intensity of the received light signal at a frequency component twice the modulation frequency f, i.e., the magnitude Sa of the 2f component, are associated with each other. The concentration Ca may be the column concentration (ppm·m) as an example. Apart from this, the first reference information also includes a first phase θ1 of the received light signal by WMS measurement of the gas to be measured G1.

The second reference information is, for example, reference information on the interfering gas G2 acquired at the second central wavelength λ2 of the interfering gas G2 and the first central wavelength λ1. The second reference information includes, as second correlation data, a second calibration curve Lw in which the concentration Cw of the interfering gas G2 and the intensity of the received light signal at a frequency component twice the modulation frequency f, i.e., the magnitude Sw of the 2f component, are associated with each other. The concentration Cw may be the column concentration (ppm·m) as an example. The second calibration curve Lw includes both the calibration curve Lw1 at the first central wavelength λ1 and the calibration curve Lw2 at the second central wavelength λ2.

The controller 90 of the measurement apparatus 1 stores the acquired reference information in the memory 60.

The processes from step S102 onward correspond to the measurement process when the measurement apparatus 1 actually performs the measurement of the state of the gas to be measured G1. As illustrated in FIGS. 3 and 4, in step S102 onward, a state in which both the gas to be measured G1 and the interfering gas G2 are present in the region to be measured R is assumed.

In step S102, the controller 90 of the measurement apparatus 1 performs the WMS measurement at the second central wavelength λ2. The controller 90 acquires the magnitude S2 of the 2f component and a second phase θ2 as the measurement result of the WMS measurement. As illustrated in FIG. 3, the gas to be measured G1 and the interfering gas G2 are present in the region R to be measured at this time, but the interfering gas G2 is dominant in the absorption of light.

In step S103, the controller 90 of the measurement apparatus 1 calculates the concentration Cw of the interfering gas G2 by comparing the first intensity of the received light signal at a frequency component twice the modulation frequency f, as acquired at the second central wavelength λ2, with the second calibration curve Lw2 at the second central wavelength λ2. For example, the controller 90 calculates the concentration Cw of the interfering gas G2 from the second calibration curve Lw2 acquired in step S101, taking the magnitude S2 of the 2f component acquired in step S102 as the first intensity.

In step S104, the controller 90 of the measurement apparatus 1 calculates the second intensity of the received light signal at a frequency component twice the modulation frequency f for the interfering gas G2 at the first central wavelength λ1 by comparing the concentration Cw of the interfering gas G2 calculated in step S103 with the second calibration curve Lw1 at the first central wavelength λ1. For example, the controller 90 calculates the magnitude Sw of the 2f component as the second intensity for the interfering gas G2 at the first central wavelength λ1.

In step S105, the controller 90 of the measurement apparatus 1 performs the WMS measurement at the first central wavelength λ1. The controller 90 acquires the magnitude S of the 2f component and the phase θ as the measurement result of the WMS measurement. As illustrated in FIG. 4, the gas to be measured G1 and the interfering gas G2 are present in the region R to be measured at this time, and the absorption of light is affected by both the gas to be measured G1 and the interfering gas G2. Therefore, the magnitude S of the 2f component encompasses information on both the gas to be measured G1 and the interfering gas G2.

In step S106, the controller 90 of the measurement apparatus 1 determines whether the phase θ acquired in step S105 and the first phase θ1 acquired in step S101 match. Upon determining that the phase θ and the first phase θ1 match, the controller 90 executes the process in step S107. Upon determining that the phase θ and the first phase θ1 differ, the controller 90 executes the process in step S108.

In steps S107 and S108, the controller 90 of the measurement apparatus 1 calculates the fourth intensity of the received light signal at a frequency component twice the modulation frequency f for the gas to be measured G1 at the first central wavelength λ1 by canceling the contribution of the second intensity in the third intensity of the received light signal at that frequency component, as acquired at the first central wavelength λ1. For example, the controller 90 calculates the magnitude Sa of the 2f component as the fourth intensity for the gas to be measured G1 at the first central wavelength λ1, taking the magnitude S of the 2f component acquired in step S105 as the third intensity and the magnitude Sw of the 2f component acquired in step S104 as the second intensity. At this time, the controller 90 changes the formula for calculating the fourth intensity according to whether the phase θ of the received light signal associated with the third intensity matches the first phase θ1.

For example, upon determining in step S106 that the phase θ and the first phase θ1 match, the controller 90 of the measurement apparatus 1 calculates the magnitude Sa of the 2f component using the first calculation formula in step S107. The first calculation formula includes, for example, the formula Sa = S + Sw.

For example, upon determining in step S106 that the phase θ and the first phase θ1 do not match, the controller 90 of the measurement apparatus 1 calculates the magnitude Sa of the 2f component using the second calculation formula in step S108. The second calculation formula includes, for example, the formula Sa = |S - Sw|. One example of θ ≠ θ1 is the relationship θ = θ1 + π.

In step S109, the controller 90 of the measurement apparatus 1 calculates the concentration Ca of the gas to be measured G1 as the state of the gas to be measured G1 by comparing the magnitude Sa of the 2f component as the fourth intensity calculated in step S107 or step S108 with the first calibration curve La1 acquired in step S101.

As described above, the controller 90 of the measurement apparatus 1 calculates the state of the gas to be measured G1 contained in the region to be measured R based on the reference information acquired by the calibration process and the received light signals at the first central wavelength λ1 and the second central wavelength λ2 of the light to be measured ML received at the light receiver 20. The controller 90 may display the calculated state of the gas to be measured G1 on the display of the output interface 80 or the like.

In step S110, the controller 90 of the measurement apparatus 1 determines whether the measurement has been completed. The controller 90 ends the process when determining that the measurement has been completed. When determining that the measurement has not been completed, the controller 90 returns to step S102 and executes the processes from step S102 onward again.

The above-described measurement apparatus 1 according to an embodiment can accurately measure the state of the gas to be measured G1 by reducing the effect of the interfering gas G2. The measurement apparatus 1 calculates the state of the gas to be measured G1 contained in the region to be measured R based on the reference information acquired in advance and the received light signals at the first central wavelength λ1 and the second central wavelength λ2. The reference information includes the first reference information on the gas to be measured G1 acquired at the first central wavelength λ1 of the gas to be measured G1 and the second reference information of the interfering gas G2 acquired at the second central wavelength λ2 of the interfering gas G2 and at the first central wavelength λ1.

The measurement apparatus 1 can thereby accurately measure the state of the gas to be measured G1 by correcting errors caused by the interfering gas G2 while using reference information including the second reference information on the interfering gas G2. For example, during the measurement process, since the measurement apparatus 1 acquires and corrects information on the interfering gas G2 included in the area to be measured R, the measurement value based on the received light signal can be corrected according to any changes that may occur in the distance to the scattering body W or the concentration Cw of the interfering gas G2. For example, when measuring the state of the gas to be measured G1 by WMS measurement, the measurement apparatus 1 can easily acquire a measurement value in which the error from interfering gas G2 is reduced. The measurement apparatus 1 can, for example, estimate the column concentration Ca caused solely by NH₃ as the gas to be measured G1.

The first reference information includes, as the first correlation data, a first calibration curve La1 in which the concentration Ca of the gas to be measured G1 and the intensity Sa of the received light signal at a frequency component twice the modulation frequency f are associated with each other. This enables the measurement apparatus 1 to accurately calculate the corresponding concentration Ca by comparing the magnitude Sa of the 2f component obtained from the received light signal at the first central wavelength λ1 with the first calibration curve La1 acquired in advance.

The first reference information includes the first phase θ1 of the received light signal of the gas to be measured G1. This enables the measurement apparatus 1 to set a determination criterion for determining which of the first calculation formula and the second calculation formula to use in calculating the magnitude Sa of the 2f component for the gas to be measured G1 at the first central wavelength λ1, as illustrated in FIG. 5. For example, the measurement apparatus 1 can set the relationship between the phase θ and the first phase θ1 as the determination criterion. The measurement apparatus 1 can select an appropriate calculation formula according to this relationship.

The second reference information includes, as the second correlation data, a second calibration curve Lw in which the concentration Cw of the interfering gas G2 and the intensity of the received light signal at a frequency component twice the modulation frequency f are associated with each other. This enables the measurement apparatus 1 to accurately calculate the corresponding concentration Cw by comparing the magnitude S2 of the 2f component obtained from the received light signal at the second central wavelength λ2 with the second calibration curve Lw acquired in advance.

The second calibration curve Lw includes both the calibration curve Lw1 at the first central wavelength λ1 and the calibration curve Lw2 at the second central wavelength λ2. This enables the measurement apparatus 1 to accurately calculate the corresponding concentration Cw by comparing the magnitude S2 of the 2f component obtained from the received light signal at the second central wavelength λ2 with the calibration curve Lw2 acquired in advance. The measurement apparatus 1 can then accurately calculate the magnitude Sw of the corresponding 2f component by comparing the calculated concentration Cw with the calibration curve Lw1 acquired in advance.

The measurement apparatus 1 calculates the concentration Cw of the interfering gas G2 by comparing the first intensity S2 of the received light signal at a frequency component twice the modulation frequency f, as acquired at the second central wavelength λ2, with the second calibration curve Lw2 at the second central wavelength λ2. This enables the measurement apparatus 1 to easily acquire correction information for reducing the error of the interfering gas G2 with respect to the measurement value when measuring the state of the gas to be measured G1 by WMS measurement.

The measurement apparatus 1 calculates the second intensity Sw of the received light signal at a frequency component twice the modulation frequency f for the interfering gas G2 at the first central wavelength λ1 by comparing the calculated concentration Cw of the interfering gas G2 with the second calibration curve Lw1 at the first central wavelength λ1. This enables the measurement apparatus 1 to accurately acquire the magnitude Sw of the 2f component as the correction information described above.

The measurement apparatus 1 calculates the fourth intensity Sa of the received light signal at a frequency component twice the modulation frequency f for the gas to be measured G1 at the first central wavelength λ1 by canceling the contribution of the second intensity in a third intensity S of the received light signal at that frequency component, as acquired at the first central wavelength λ1. This enables the measurement apparatus 1 to reduce the error of the interfering gas G2 with respect to the measurement value when measuring the state of the gas to be measured G1 by WMS measurement, for example.

The measurement apparatus 1 changes the formula for calculating the fourth intensity Sa according to whether the phase θ of the received light signal associated with the third intensity S matches the first phase θ1. This enables the measurement apparatus 1 to calculate the fourth intensity Sa with a more appropriate calculation formula according to the relationship between the phase θ and the first phase θ1. The measurement apparatus 1 can thereby accurately measure the state of the gas to be measured G1 by reducing the effect of the interfering gas G2.

The measurement apparatus 1 calculates the concentration Ca of the gas to be measured G1 as the state of the gas to be measured G1 by comparing the calculated fourth intensity Sa with the first calibration curve La1. This enables the measurement apparatus 1 to accurately calculate the corresponding concentration Ca by comparing the magnitude Sa of the 2f component obtained from the received light signal at the first central wavelength λ1 with the first calibration curve La1 acquired in advance. The measurement apparatus 1 can accurately measure the state of the gas to be measured G1 by reducing the effect of the interfering gas G2. For example, since the measurement apparatus 1 acquires the concentration Cw of the interfering gas G2 included in the region to be measured R and corrects the measurement value, the measurement value can be corrected according to any changes that may occur in the distance to the scattering body W or the concentration Cw of the interfering gas G2.

Although the present disclosure is based on embodiments and drawings, it is to be noted that various changes and modifications may be made by those skilled in the art based on the present disclosure. Therefore, such changes and modifications are to be understood as included within the scope of the present disclosure. For example, the functions and the like included in the various configurations and steps may be reordered in any logically consistent way. Furthermore, components or steps may be combined into one or divided.

For example, a general-purpose electronic device, such as a smartphone or a computer, can also be configured to function as a portion of the measurement apparatus 1 according to the above embodiment. Specifically, a program describing the processing content for realizing the functions of the controller 90 and the like of the measurement apparatus 1 according to an embodiment is stored in a memory of the electronic device, and the program is read and executed by the processor of the electronic device. Accordingly, the present disclosure can also be embodied as a program executable by a processor.

Alternatively, the present disclosure can also be realized as a non-transitory computer readable medium storing a program executable by one or more processors to cause the measurement apparatus 1 according to an embodiment to execute each function. Such embodiments are also to be understood as falling within the scope of the present disclosure.

For example, the shape, pattern, size, arrangement, orientation, type, number, and the like of the above-described components are not limited to the above explanation or the drawings. The shape, pattern, size, arrangement, orientation, type, number, and the like of each component may be selected freely as long as the functions of the component can be achieved. The constituent elements of the measurement apparatus 1 in the drawings are illustrated as functional concepts, and the specific form of each constituent element is not limited to the form in the drawings.

In the above embodiment, the first reference information has been described as including, as the first correlation data, the first calibration curve La1 in which the concentration Ca of the gas to be measured G1 and the intensity Sa of the received light signal at a frequency component twice the modulation frequency f are associated with each other, but this configuration is not limiting. Instead of or in addition to the first correlation data, the first reference information may include any other information that can be used to calculate the state of the gas to be measured G1.

In the above embodiment, the first reference information has been described as including the first phase θ1 of the received light signal of the gas to be measured G1, but this configuration is not limiting. Instead of or in addition to the first phase θ1, the first reference information may include any other information that can be used to calculate the state of the gas to be measured G1. For example, the first reference information may include the second phase θ2 included in the measurement result when the WMS measurement is performed at the second central wavelength λ2.

In the above embodiment, the second reference information has been described as including, as the second correlation data, the second calibration curve Lw in which the concentration Cw of the interfering gas G2 and the intensity of the received light signal at a frequency component twice the modulation frequency f are associated with each other, but this configuration is not limiting. Instead of or in addition to the second correlation data, the second reference information may include any other information that can be used to calculate the state of the gas to be measured G1.

In the above embodiment, the second calibration curve Lw has been described as including both the calibration curve Lw1 at the first central wavelength λ1 and the calibration curve Lw2 at the second central wavelength λ2, but this configuration is not limiting. The second calibration curve Lw may include only one of the calibration curve Lw1 and calibration curve Lw2, as long as the measurement apparatus 1 can calculate the state of the gas to be measured G1.

In the above embodiment, the measurement apparatus 1 has been described as calculating the concentration Cw of the interfering gas G2 by comparing the first intensity S2 of the received light signal at a frequency component twice the modulation frequency f, as acquired at the second central wavelength λ2, with the second calibration curve Lw2 at the second central wavelength λ2, but this configuration is not limiting. The measurement apparatus 1 may calculate the concentration Cw by any other method using the reference information and the received light signal at the second central wavelength λ2. Also, the measurement apparatus 1 need not calculate the concentration Cw during the measurement process if the state of the gas to be measured G1 can be calculated using the reference information and the received light signal at the second central wavelength λ2.

In the above embodiment, the measurement apparatus 1 has been described as calculating the second intensity Sw of the received light signal at a frequency component twice the modulation frequency f for the interfering gas G2 at the first central wavelength λ1 by comparing the calculated concentration Cw of the interfering gas G2 with the second calibration curve Lw1 at the first central wavelength λ1, but this configuration is not limiting. The measurement apparatus 1 may calculate the second intensity Sw by any other method using the reference information and the received light signal at the second central wavelength λ2.

In the above embodiment, the measurement apparatus 1 has been described as calculating the fourth intensity Sa of the received light signal at a frequency component twice the modulation frequency f for the gas to be measured G1 at the first central wavelength λ1 by canceling the contribution of the second intensity in the third intensity S of the received light signal at that frequency component, as acquired at the first central wavelength λ1, but this configuration is not limiting. The measurement apparatus 1 may calculate the fourth intensity Sa by any other method using the reference information and the received light signals at the first central wavelength λ1 and the second central wavelength λ2.

In the above embodiment, the measurement apparatus 1 has been described as changing the formula for calculating the fourth intensity Sa according to whether the phase θ of the received light signal associated with the third intensity S matches the first phase θ1, but this configuration is not limiting. The measurement apparatus 1 may use any other criteria instead of or in addition to the relationship between the phase θ and the first phase θ1 as determination criteria when selecting the calculation formula.

In the above embodiment, the measurement apparatus 1 has been described as calculating the concentration Ca of the gas to be measured G1 as the state of the gas to be measured G1 by comparing the calculated fourth intensity Sa with the first calibration curve La1, but this configuration is not limiting. The measurement apparatus 1 may calculate the concentration Ca by any other method using the reference information and the received light signals at the first central wavelength λ1 and the second central wavelength λ2.

In the above embodiment, the measurement apparatus 1 has been described as calculating the state of the gas to be measured G1 at a single first central wavelength λ1 for one type of gas to be measured G1, but this configuration is not limiting. The measurement apparatus 1 may calculate the state of the gas to be measured G1 for a plurality of types of gas to be measured G1, or may calculate the state of the gas to be measured G1 in a case in which the first central wavelength λ1 includes a plurality of wavelengths.

In the above embodiment, the measurement apparatus 1 has been described as calculating the state of the gas to be measured G1 based on a single second central wavelength λ2 for one type of interfering gas G2, but this configuration is not limiting. The measurement apparatus 1 may calculate the state of the gas to be measured G1 for a plurality of types of interfering gas G2, or may calculate the state of the gas to be measured G1 in a case in which the second central wavelength λ2 includes a plurality of wavelengths.

For example, in the above embodiment, the measurement apparatus 1 includes the irradiator 10 and the drive unit 30 as different components, but this configuration is not limiting. The measurement apparatus 1 may include the irradiator 10 and the drive unit 30 together as one component. For example, the measurement apparatus 1 may be configured to have the functions of the driver contained in the irradiator 10, or may have the functions of the light source 11 contained in the drive unit 30 and may irradiate the irradiation light L to the outside through the irradiation optical system 12 that includes lenses, light guiding members such as optical fibers, and the like.

In the above embodiment, the measurement apparatus 1 includes the light receiver 20 and the extractor 40 as different components, but this configuration is not limiting. The measurement apparatus 1 may include the light receiver 20 and the extractor 40 together as one component.

In the above embodiment, the measurement apparatus 1 has been described as extracting a frequency component that is twice the modulation frequency f from the received light signal and calculating the state of the gas to be measured G1 based on the extracted frequency component, but this configuration is not limiting. The measurement apparatus 1 may calculate the state of the gas to be measured G1 by any other method. For example, the measurement apparatus 1 may calculate the state of the gas to be measured G1 using other methods that do not depend on WMS.

In the above embodiment, the measurement apparatus 1 has been described as canceling the variation of the received light power by calculating the 2f component/1f component to acquire a value proportional to the concentration Ca of the gas to be measured G1 as the state of the gas to be measured G1, but this configuration is not limiting. The measurement apparatus 1 may calculate the state of the gas to be measured G1 using any other calculation formula based on the 2f component extracted from the received light signal.

In the above embodiment, the measurement apparatus 1 has been described as having a lock-in amplifier as the extractor 40, but this configuration is not limiting. Instead of or in addition to a lock-in amplifier, the measurement apparatus 1 may use software executed by the CPU or the like of the controller 90 to realize a function similar to that of the lock-in amplifier in the extractor 40. In this case, the measurement apparatus 1 may use the Fourier transform.

In the above embodiment, the measurement apparatus 1 has been described as measuring the state of the gas to be measured G1 based on the absorption characteristics of the gas to be measured G1 with respect to the irradiation light L, but this configuration is not limiting. The measurement apparatus 1 may also measure the state of the gas to be measured G1 based on the scattering characteristics and reflection characteristics of the gas to be measured G1 with respect to the irradiation light L.

In the above embodiment, the light receiver 20 has been described as being arranged on the same side as the irradiator 10 and receiving the light to be measured ML scattered or reflected by the scattering body W located behind the gas to be measured G1, but this configuration is not limiting. The light receiver 20 may be arranged to face the irradiator 10 with the region to be measured R therebetween. In this case, the light receiver 20 may receive the light to be measured ML obtained by the irradiation light L irradiated from the irradiator 10 passing through the region to be measured R.

In the above embodiment, the scattering body W has been described as including background objects such as walls and piping, but this configuration is not limiting. The scattering body W may be any object other than walls and piping.

In the above embodiment, the state of the gas to be measured G1 has been described as including the concentration or the like of the gas to be measured G1, but this configuration is not limiting. The state of the gas to be measured G1 may, for example, include the presence or absence itself of the gas to be measured G1.

Some embodiments of the present disclosure are exemplified below. It should be noted that the embodiments of the present disclosure are not, however, limited to these examples.

### [Appendix 1]

A measurement apparatus comprising:
an irradiator configured to irradiate irradiation light;
a light receiver configured to receive light to be measured based on the irradiation light irradiated by the irradiator onto a region to be measured; and
a controller configured to calculate a state of a gas to be measured contained in the region to be measured based on first reference information on the gas to be measured acquired at a first central wavelength of the gas to be measured, second reference information on an interfering gas acquired at a second central wavelength of the interfering gas and at the first central wavelength, and a received light signal received by the light receiver at the first central wavelength of the light to be measured and at the second central wavelength.

### [Appendix 2]

The measurement apparatus according to appendix 1, wherein
the controller is configured to modulate a wavelength of the irradiation light at a modulation frequency, and
the first reference information includes, as first correlation data, a first calibration curve in which a concentration of the gas to be measured and an intensity of the received light signal at a frequency component twice the modulation frequency are associated with each other.

### [Appendix 3]

The measurement apparatus according to appendix 2, wherein the first reference information includes a first phase of the received light signal of the gas to be measured.

### [Appendix 4]

The measurement apparatus according to appendix 2 or 3, wherein the second reference information includes, as second correlation data, a second calibration curve in which a concentration of the interfering gas and an intensity of the received light signal at a frequency component twice the modulation frequency are associated with each other.

### [Appendix 5]

The measurement apparatus according to appendix 4, wherein the second calibration curve includes both a calibration curve at the first central wavelength and a calibration curve at the second central wavelength.

### [Appendix 6]

The measurement apparatus according to appendix 4 or 5, wherein the controller is configured to calculate the concentration of the interfering gas by comparing a first intensity of the received light signal at the frequency component, as acquired at the second central wavelength, with the second calibration curve at the second central wavelength.

### [Appendix 7]

The measurement apparatus according to appendix 6, wherein the controller is configured to calculate a second intensity of the received light signal at the frequency component for the interfering gas at the first central wavelength by comparing the calculated concentration of the interfering gas with the second calibration curve at the first central wavelength.

### [Appendix 8]

The measurement apparatus according to appendix 7, wherein the controller is configured to calculate a fourth intensity of the received light signal at the frequency component for the gas to be measured at the first central wavelength by canceling a contribution of the second intensity in a third intensity of the received light signal at the frequency component, as acquired at the first central wavelength.

### [Appendix 9]

The measurement apparatus according to appendix 8, wherein the controller is configured to change a formula for calculating the fourth intensity according to whether a phase of the received light signal associated with the third intensity matches the first phase.

### [Appendix 10]

The measurement apparatus according to appendix 8 or 9, wherein the controller is configured to calculate the concentration of the gas to be measured as the state of the gas to be measured by comparing the calculated fourth intensity with the first calibration curve.

### [Appendix 11]

A measurement method comprising:
irradiating irradiation light;
receiving light to be measured based on the irradiation light irradiated onto a region to be measured; and
calculating a state of a gas to be measured contained in the region to be measured based on first reference information on the gas to be measured acquired at a first central wavelength of the gas to be measured, second reference information on an interfering gas acquired at a second central wavelength of the interfering gas and at the first central wavelength, and a received light signal received at the first central wavelength of the light to be measured and at the second central wavelength.

### [Appendix 12]

A non-transitory computer readable medium storing a program configured to cause a measurement apparatus to execute operations comprising:
irradiating irradiation light;
receiving light to be measured based on the irradiation light irradiated onto a region to be measured; and
calculating a state of a gas to be measured contained in the region to be measured based on first reference information on the gas to be measured acquired at a first central wavelength of the gas to be measured, second reference information on an interfering gas acquired at a second central wavelength of the interfering gas and at the first central wavelength, and a received light signal received at the first central wavelength of the light to be measured and at the second central wavelength.

## Claims

1. A measurement apparatus comprising:
an irradiator configured to irradiate irradiation light;
a light receiver configured to receive light to be measured based on the irradiation light irradiated by the irradiator onto a region to be measured; and
a controller configured to calculate a state of a gas to be measured contained in the region to be measured based on first reference information on the gas to be measured acquired at a first central wavelength of the gas to be measured, second reference information on an interfering gas acquired at a second central wavelength of the interfering gas and at the first central wavelength, and a received light signal received by the light receiver at the first central wavelength of the light to be measured and at the second central wavelength.

2. The measurement apparatus according to claim 1, wherein
the controller is configured to modulate a wavelength of the irradiation light at a modulation frequency, and
the first reference information includes, as first correlation data, a first calibration curve in which a concentration of the gas to be measured and an intensity of the received light signal at a frequency component twice the modulation frequency are associated with each other.

3. The measurement apparatus according to claim 2, wherein
the first reference information includes a first phase of the received light signal of the gas to be measured.

4. The measurement apparatus according to claim 3, wherein
the second reference information includes, as second correlation data, a second calibration curve in which a concentration of the interfering gas and an intensity of the received light signal at a frequency component twice the modulation frequency are associated with each other.

5. The measurement apparatus according to claim 4, wherein
the second calibration curve includes both a calibration curve at the first central wavelength and a calibration curve at the second central wavelength.

6. The measurement apparatus according to claim 4, wherein
the controller is configured to calculate the concentration of the interfering gas by comparing a first intensity of the received light signal at the frequency component, as acquired at the second central wavelength, with the second calibration curve at the second central wavelength.

7. The measurement apparatus according to claim 6, wherein
the controller is configured to calculate a second intensity of the received light signal at the frequency component for the interfering gas at the first central wavelength by comparing the calculated concentration of the interfering gas with the second calibration curve at the first central wavelength.

8. The measurement apparatus according to claim 7, wherein
the controller is configured to calculate a fourth intensity of the received light signal at the frequency component for the gas to be measured at the first central wavelength by canceling a contribution of the second intensity in a third intensity of the received light signal at the frequency component, as acquired at the first central wavelength.

9. The measurement apparatus according to claim 8, wherein
the controller is configured to change a formula for calculating the fourth intensity according to whether a phase of the received light signal associated with the third intensity matches the first phase.

10. The measurement apparatus according to claim 8, wherein
the controller is configured to calculate the concentration of the gas to be measured as the state of the gas to be measured by comparing the calculated fourth intensity with the first calibration curve.

11. A measurement method comprising:
irradiating irradiation light;
receiving light to be measured based on the irradiation light irradiated onto a region to be measured; and
calculating a state of a gas to be measured contained in the region to be measured based on first reference information on the gas to be measured acquired at a first central wavelength of the gas to be measured, second reference information on an interfering gas acquired at a second central wavelength of the interfering gas and at the first central wavelength, and a received light signal received at the first central wavelength of the light to be measured and at the second central wavelength.

12. A non-transitory computer readable medium storing a program configured to cause a measurement apparatus to execute operations comprising:
irradiating irradiation light;
receiving light to be measured based on the irradiation light irradiated onto a region to be measured; and
calculating a state of a gas to be measured contained in the region to be measured based on first reference information on the gas to be measured acquired at a first central wavelength of the gas to be measured, second reference information on an interfering gas acquired at a second central wavelength of the interfering gas and at the first central wavelength, and a received light signal received at the first central wavelength of the light to be measured and at the second central wavelength.
